# EUROPEAN PATENT APPLICATION

(11) **EP 4 822 750 A1**
(43) Date of publication of application: **14.10.2026**
(21) Application number: 25215545.2
(22) Date of filing: 13.11.2025
(51) Int. Cl.: H01M 4/04, H01M 4/134, H01M 4/1395, H01M 4/36, H01M 4/38, H01M 4/62, H01M 10/0525

(54) **NEGATIVE ELECTRODE ACTIVE MATERIAL, METHOD OF MANUFACTURING THE NEGATIVE ELECTRODE ACTIVE MATERIAL, AND NEGATIVE ELECTRODE INCLUDING THE NEGATIVE ELECTRODE ACTIVE MATERIAL**

(30) Priority: 07.04.2025 KR 20250044500
(71) Applicant: SAMSUNG SDI CO., LTD., Yongin-si, Gyeonggi-do 17084 (KR)
(72) Inventor: KIM, Hyejin, 17084 Yongin-si (KR); NAH, Jaehou, 17084 Yongin-si (KR); KIM, Youngugk, 17084 Yongin-si (KR); KIM, Jaewon, 17084 Yongin-si (KR); KIM, Deok-Hyun, 17084 Yongin-si (KR); OH, Doori, 17084 Yongin-si (KR)
(74) Representative: Marks & Clerk LLP

(57) **Abstract**

The present invention relates to a negative electrode active material, a method for manufacturing the negative electrode active material, and a negative electrode including the negative electrode active material. The negative electrode active material includes porous particles and an amorphous carbon coating layer surrounding the porous particles, wherein the porous particles include metal particles and silicon nanowires in pores of the porous particles, and wherein ends of the silicon nanowires are attached to the metal particle.

## Description

### BACKGROUND

The present invention relates to a negative electrode active material, a method for producing the negative electrode active material, and a negative electrode including the negative electrode active material.

With the rapid proliferation of battery-powered electronic devices such as mobile phones, notebook computers, and electric vehicles, the demand for rechargeable batteries with high energy density and large capacity has significantly increased. In response, extensive research and development efforts have been made to enhance the performance of rechargeable lithium batteries.

A rechargeable lithium battery generally includes a positive electrode, a negative electrode, and an electrolyte. Both the positive and negative electrodes contain active materials capable of lithium-ion intercalation and deintercalation. Electrical energy is generated through oxidation and reduction reactions as lithium ions move between the electrodes during charging and discharging.

### SUMMARY

The present invention provides a structurally stable negative electrode active material having excellent efficiency and cycle life characteristics.

The present invention also provides a method of manufacturing the negative electrode active material.

The present invention further provides a rechargeable lithium battery having excellent efficiency and a long cycle life.

According to a first aspect of the present invention there is provided a negative electrode active material including a porous particle and an amorphous carbon coating layer surrounding the porous particle, wherein the porous particle includes metal particles and silicon nanowires within pores of the porous particle, and wherein an end of each of the silicon nanowire is attached to the metal particles.

According to a second aspect of the present invention there is provided a method for manufacturing a negative electrode active material including forming metal particles within pores of a porous particle; forming silicon nanowires within the pores using the metal particles as a catalyst; and forming an amorphous carbon coating layer on a surface of the porous particle.

According to a third aspect of the present invention there is provided a negative electrode including a negative electrode current collector and a negative electrode active material layer on the negative electrode current collector, wherein the negative electrode active material layer includes negative electrode active materials, wherein an amount of the negative electrode active materials in the negative electrode active material layer is about 80 wt% to about 99 wt% based on a total weight of the negative electrode active material layer, wherein the negative electrode active materials include a first negative electrode active material, wherein the first negative electrode active material includes a porous particle and an amorphous carbon coating layer surrounding the porous particle, wherein the porous particle includes metal particles and silicon nanowires in the pores of the porous particle, and wherein a specific surface area (BET) of the first negative electrode active material is from about 1.0 m²/g to about 7.0 m²/g.

At least some of the above and other features of the invention are set out in the claims.

### BRIEF DESCRIPTION OF DRAWINGS

FIG. 1 illustrates a schematic conceptual diagram of a rechargeable lithium battery according to embodiments of the present invention.
FIGS. 2 to 5 illustrate schematic views of a rechargeable lithium battery according to embodiments, with FIG. 2 showing a cylindrical battery, FIG. 3 showing a prismatic battery, and FIGS. 4 and 5 showing pouch-type batteries.
FIG. 6 is a cross-sectional view illustrating a negative electrode according to an embodiment of the present invention.
FIG. 7 is a cross-sectional view of a precursor for a first negative electrode active material according to an embodiment of the present invention.
FIG. 8 is a cross-sectional view of a first negative electrode active material according to an embodiment of the present invention.
FIG. 9 is a flowchart of a method of manufacturing a first negative electrode active material according to an embodiment of the present invention.

### DETAILED DESCRIPTION OF EMBODIMENTS

To fully understand the configuration and effects of the present disclosure, some embodiments will be described with reference to the accompanying drawings. However, the present disclosure is not limited to the following embodiments and may be implemented in various forms. The embodiments are provided solely to illustrate the present disclosure and to enable those skilled in the art to fully understand its scope.

In this description, when an element is described as being "on" another element, it may be directly on the other element, or one or more intervening elements may be present. In the drawings, certain thicknesses may be exaggerated to better illustrate technical details. Throughout the specification, like reference numerals indicate like elements. The embodiments described herein may be illustrated using sectional and/or plan views, which are presented as idealized examples of the present disclosure. The thicknesses of layers and regions in the drawings may be exaggerated for clarity. The regions shown in the drawings are for illustrative purposes and should not be construed as limiting the scope of the present disclosure. Although terms such as "first," "second," and "third" may be used to describe various elements, these terms are merely for distinction and do not imply any particular order or hierarchy. The embodiments described and illustrated herein include complementary variations.

The terms used in this description serve only to explain various embodiments and are not intended to limit the present disclosure. Unless explicitly stated otherwise, singular forms may also include plural forms. The terms "comprises/includes" and "comprising/including" do not exclude the presence or addition of one or more other components. The phrases "A or B," "at least one of A and B," "at least one of A or B," "A, B, or C," "at least one of A, B, and C," and "at least one of A, B, or C" include any one or all possible combinations of the listed elements.

In this description, the phrase "combination thereof" may refer to a mixture, a stack, a composite, a copolymer, an alloy, a blend, or a reaction product.

Unless otherwise specifically defined, the term "particle diameter" refers to an average particle diameter. The particle diameter may represent the median particle size (D50), which corresponds to the diameter of particles at 50 vol% in a cumulative particle size distribution. The average particle diameter (D50) may be measured using widely known methods, such as a particle size analyzer, transmission electron microscope (TEM) imaging, or scanning electron microscope (SEM) imaging. Alternatively, dynamic light scattering may be used, where particle counts within size ranges are analyzed to calculate the average particle diameter (D50). Additionally, a laser scattering method may be employed, in which target particles are dispersed in a solvent, introduced into a laser scattering particle measurement device (e.g., MT3000 from Microtrac, Inc.), irradiated with ultrasonic waves at 28 kHz and 60 W, and subsequently analyzed to determine the D50 value based on a 50% cumulative particle size distribution.

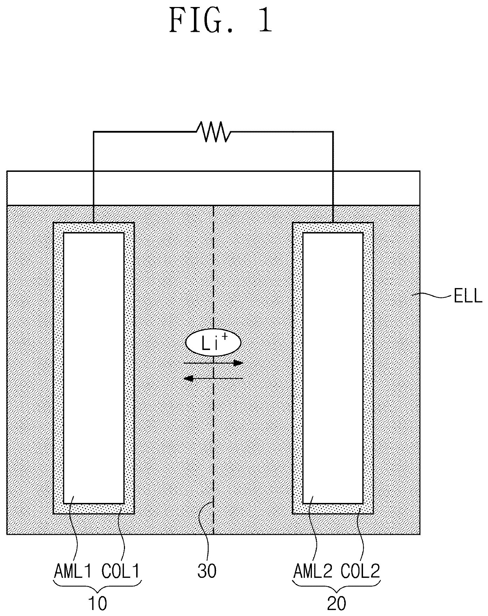

FIG. 1 is a cross-sectional view of a rechargeable lithium battery according to embodiments of the present invention. Referring to FIG. 1, the rechargeable lithium battery may include a positive electrode 10, a negative electrode 20, a separator 30, and an electrolyte solution ELL.

The positive electrode 10 and the negative electrode 20 may be spaced apart from each other by the separator 30. That is, the separator 30 may be disposed between the positive electrode 10 and the negative electrode 20. The positive electrode 10, the negative electrode 20 and the separator 30 may be in contact with the electrolyte solution ELL. The positive electrode 10, the negative electrode 20 and the separator 30 may be impregnated in the electrolyte solution ELL.

The electrolyte solution ELL may be a medium for transferring lithium ions between the positive electrode 10 and the negative electrode 20. In the electrolyte solution ELL, the lithium ions may move through the separator 30 toward the positive electrode 10 or the negative electrode 20.

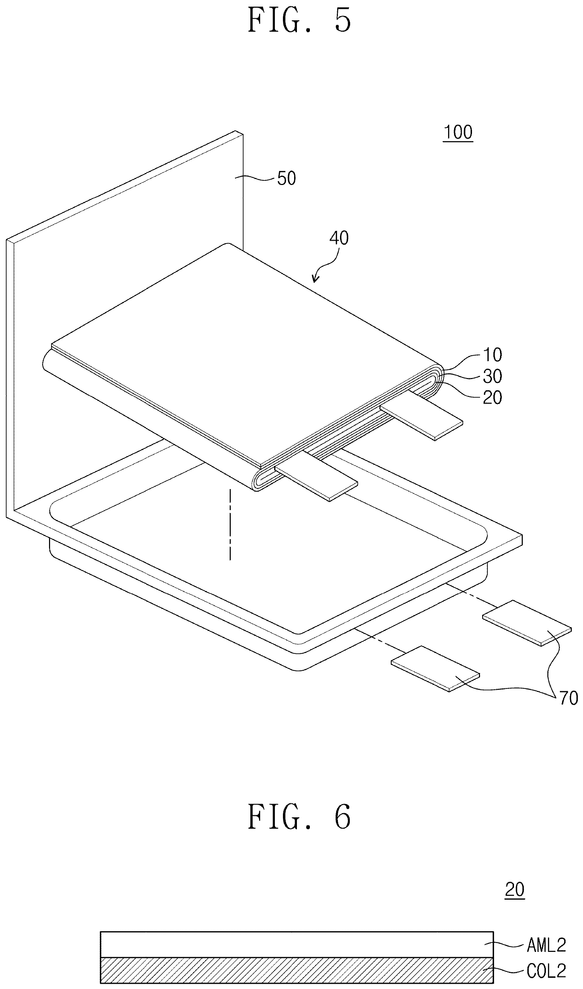

The negative electrode 20 will be described later with reference to FIG. 6.

### Positive Electrode 10

The positive electrode 10 for a rechargeable lithium battery may include a current collector COL1 and a positive electrode active material layer AML1 on the current collector. The positive electrode active material layer AML1 may include a positive electrode active material and may further include a binder and/or a conductive material (e.g., an electrically conductive material).

In an example, the positive electrode 10 further includes an additive that may serve as a sacrificial positive electrode.

An amount of the positive electrode active material may be about 90 wt% to about 99.5 wt% based on 100 wt% of the positive electrode active material layer AML1. Amounts of the binder and the conductive material may be about 0.5 wt% to about 10 wt%, respectively, based on 100 wt% of the positive electrode active material layer AML1.

The binder functions to attach the positive electrode active material particles to each other and also to attach the positive electrode active material to the current collector COL1. Examples of the binder include polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like, as non-limiting examples.

The conductive material may be used to impart conductivity (e.g., electrical conductivity) to the electrode. Any material that does not cause chemical change (e.g., does not cause an undesirable chemical change in the rechargeable lithium battery) and conducts electrons may be used in the battery. Examples of the conductive material include a carbon-based material such as natural graphite, artificial graphite, carbon black, acetylene black, ketjen black, a carbon fiber, a carbon nanofiber, and carbon nanotube; a metal-based material containing copper, nickel, aluminium, silver, etc., in a form of a metal powder or a metal fiber; a conductive polymer such as a polyphenylene derivative; or a mixture thereof.

Aluminium may be used as the current collector COL1, but is not limited thereto.

### Positive Electrode Active Material

The positive electrode active material may include a compound (lithiated intercalation compound) that is capable of intercalating and deintercalating lithium. Specifically, at least one of a composite oxide of lithium and a metal selected from cobalt, manganese, nickel, and combinations thereof may be used.

The composite oxide may be a lithium transition metal composite oxide. Specific examples of the composite oxide may include lithium nickel-based oxide, lithium cobalt-based oxide, lithium manganese-based oxide, lithium iron phosphate-based compound, cobalt-free nickel-manganese-based oxide, or a combination thereof.

As examples, the following compounds represented by any one of the following chemical formulas may be used. LiₐA_{1-b}X_{b}O_{2-c}D_{c} (0.90≤a≤1.8, 0≤b≤0.5, and 0≤c≤0.05); LiₐMn_{2-b}X_{b}O_{4-c}D_{c} (0.90≤a≤1.8, 0≤b≤0.5, and 0≤c≤0.05); LiₐNi_{1-b-c}Co_{b}X_{c}O_{2-α}D_{α} (0.90≤a≤1.8, 0≤b≤0.5, 0≤c≤0.5, and 0<α<2); LiₐNi_{1-b-c}Mn_{b}X_{c}O_{2-α}D_{α} (0.90≤a≤1.8, 0≤b≤0.5, 0≤c≤0.5, and 0<α<2); LiₐNi_{b}Co_{c}L¹_{d}GₑO₂ (0.90≤a≤1.8, 0≤b≤0.9, 0≤c≤0.5, 0≤d≤0.5, and 0≤e≤0.1); LiₐNiG_{b}O₂ (0.90≤a≤1.8 and 0.001≤b≤0.1); LiₐCoG_{b}O₂ (0.90≤a≤1.8 and 0.001≤b≤0.1); LiₐMn_{1-b}G_{b}O₂ (0.90≤a≤1.8 and 0.001≤b≤0.1); LiₐMn₂G_{b}O₄ (0.90≤a≤1.8 and 0.001≤b≤0.1); LiₐMn_{1-g}G_{g}PO₄ (0.90≤a≤1.8 and 0≤g≤0.5); Li_{(3-f)}Fe₂(PO₄)₃ (0≤f≤2); or LiₐFePO₄ (0.90≤a≤1.8). In these chemical formulas, A is Ni, Co, Mn, or a combination thereof; X is Al, Ni, Co, Mn, Cr, Fe, Mg, Sr, V, a rare earth element or a combination thereof; D is O, F, S, P, or a combination thereof; G is Al, Cr, Mn, Fe, Mg, La, Ce, Sr, V, or a combination thereof; and L¹ is Mn, Al, or a combination thereof.

The positive electrode active material may be, for example, a high nickel-based positive electrode active material having a nickel amount of greater than or equal to about 80 mol%, greater than or equal to about 85 mol%, greater than or equal to about 90 mol%, greater than or equal to about 91 mol%, or greater than or equal to about 94 mol% and less than or equal to about 99 mol% based on 100 mol% of the metal excluding lithium in the lithium transition metal composite oxide. The high-nickel-based positive electrode active material may be capable of providing for high capacity and may be used in a high-capacity, high-density rechargeable lithium battery.

### Separator 30

Depending on the type of the rechargeable lithium battery, the separator 30 may be present between the positive electrode 10 and the negative electrode 20. The separator 30 may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator 30 may include a porous substrate and a coating layer including an organic material, an inorganic material, or a combination thereof on one or both surfaces of the porous substrate.

The porous substrate may be a polymer film formed of any one selected polymer polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, and polytetrafluoroethylene (e.g., TEFLON), or a copolymer or mixture of two or more thereof.

The organic material may include a polyvinylidene fluoride-based polymer or a (meth)acrylic-based polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof. But the present disclosure is not limited to these examples.

The organic material and the inorganic material may be mixed in one coating layer, or a coating layer including an organic material and a coating layer including an inorganic material may be stacked.

### Electrolyte Solution ELL

The electrolyte solution ELL for a rechargeable lithium battery may include a non-aqueous organic solvent and a lithium salt.

The non-aqueous organic solvent may serve as a medium for transmitting ions taking part in the electrochemical reaction of a battery.

The non-aqueous organic solvent may be a carbonate-based, ester-based, ether-based, ketone-based, or alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), fluoroethylene carbonate (FEC), propylene carbonate (PC), butylene carbonate (BC), and the like.

The ester-based solvent may include methyl acetate, ethyl acetate, n-propyl acetate, dimethyl acetate, methyl propionate, ethyl propionate, decanolide, mevalonolactone, valerolactone, caprolactone, and the like.

The ether-based solvent may include dibutyl ether, tetraethylene glycol dimethyl ether (tetraglyme), bis(2-methoxyethyl) ether (diglyme), dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include ethanol, isopropyl alcohol, and the like and the aprotic solvent may include nitriles such as R-CN (wherein R is a C2 to C20 linear, branched, or cyclic hydrocarbon group, a double bond, an aromatic ring, or an ether bond), and the like; amides such as dimethylformamide; dioxolanes such as 1,3-dioxolane, 1,4-dioxolane, and the like; sulfolanes, and the like.

The non-aqueous organic solvents may be used alone or in combination of two or more.

In addition, when using a carbonate-based solvent, a cyclic carbonate and a chain carbonate may be mixed and used, and the cyclic carbonate and the chain carbonate may be mixed in a volume ratio of about 1:1 to about 1:9.

The lithium salt dissolved in the organic solvent supplies lithium ions in a battery, enables a basic operation of a rechargeable lithium battery, and improves transportation of the lithium ions between positive and negative electrodes. Examples of the lithium salt include at least one selected from LiPF₆, LiBF₄, LiSbF₆, LiAsF₆, LiClO₄, LiAlO₂, LiAlCl₄, LiPO₂F₂, LiCl, LiI, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethanesulfonate, lithium difluoro(oxalato)borate (LiDFOB), lithium difluorobis(oxalato)phosphate (LiDFBOP), and lithium bis(oxalato)borate (LiBOB).

### First Negative Electrode Active Material and Method of Manufacturing the First Negative Electrode Active Material

FIG. 6 is a cross-sectional view of a negative electrode according to an embodiment of the present disclosure. Referring to FIG. 6, the negative electrode 20 for a rechargeable lithium battery includes a current collector COL2, and a negative electrode active material layer AML2 positioned on the current collector COL2. The negative electrode active material layer AML2 includes negative electrode active materials, and may further include a binder and/or a conductive material (e.g., an electrically conductive material).

The negative electrode active materials in the negative electrode active material layer AML2 include the first negative electrode active material AM. The negative electrode active materials in the negative electrode active material layer AML2 may be used alone as a single type or may be used as a mixture of two or more types. Hereinafter, the first negative electrode active material AM and a method of producing the first negative electrode active material AM will be described. A description of the negative electrode will be given below.

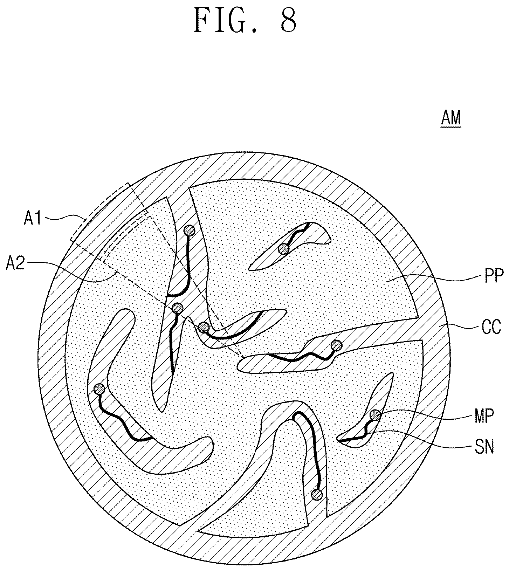

FIG. 8 is a cross-sectional view of a porous particle of a first negative electrode active material AM according to an embodiment of the present disclosure. Referring to FIG. 8, the first negative electrode active material AM includes a porous particle PP and an amorphous carbon coating layer CC surrounding the porous particle PP. The porous particle PP includes pores, metal particles MP, and silicon nanowires SN that are located within the pores of the porous particle. One end (e.g., the first end) of the silicon nanowire SN is attached to the metal particle MP. The other end (e.g., the second end) of the silicon nanowire SN may be attached inside the pore of the porous particle PP.

A porous particle PP means a particle including a plurality of pores. The porous particle PP may include at least one of hard carbon, alumina, silica gel, activated carbon, zeolite, porous titania, or combinations thereof. The porous particle is not limited to the above examples as long as it does not chemically react with lithium ions during charging and discharging and so long as it includes a large number of pores.

The porosity of the porous particles (PP) may be about 50% to about 80%, about 55% to about 75%, about 60% to about 75%, or about 65% to about 75%. Here, the term "porosity" refers to a ratio of the volume occupied by pores in the particles to the total volume of the particles. The porosity may be measured by nitrogen adsorption-desorption analysis (BET analysis).

The amorphous carbon coating layer CC surrounds the porous particle PP. The amorphous carbon coating layer CC may be in a form surrounding the particle surface and inside the pores of the porous particle PP. The porous particle PP including metal particles MP and silicon nanowires SN may be coated with amorphous carbon.

The amorphous carbon coating layer CC may be formed by vapor deposition process using a carbon source. The carbon source may include methane, ethane, ethylene, acetylene, propane, benzene, and the like. The amorphous carbon coating layer CC may reduce the specific surface area, increase the conductivity, and improve the cycle life characteristics by reducing side reactions with the electrolyte solution.

The amorphous carbon coating layer CC may have a D band (peak position: around 1350±50 cm⁻¹) and a G band (peak position of around 1580±50 cm⁻¹) in a Raman spectrum obtained by Raman spectroscopy. Herein, the D/G ratio is defined as the ratio of the maximum peak intensity of the D band to the maximum peak intensity of the G band.

In an example, the D/G ratio of the amorphous carbon coating layer CC may be at least about 0.7. For example, the D/G ratio of the amorphous carbon coating layer CC may be about 0.7 to about 2.0, or about 0.9 to about 1.5. When the ratio of the amorphous carbon coating layer CC is in these ranges, a negative electrode active material having excellent electrical conductivity may be produced.

The amorphous carbon coating layer CC may be, for example, about 0.1 wt % to about 8 wt %, or about 3 wt % to about 7 wt % based on a total weight of the first negative electrode active material AM. When the amount of the amorphous carbon coating layer CC satisfies these ranges, the amorphous-carbon coating layer CC may effectively protect the surface from the electrolyte. In addition, a rechargeable lithium battery with excellent cycle characteristics and capacity may be manufactured using the porous particles PP. When the amount of the amorphous carbon coating layer CC is not in the ranges described above, an expansion rate of the silicon nanowires may be high and the capacity retention rate may be low.

The first negative electrode active material AM includes metal particles MP. The metal particles MP are located within the pores of the porous particle PP. The metal particles MP may include at least one of Cu, Ag, Ga, Ti, Au, Sn, or combinations thereof. The metal particles MP may function as a catalyst during the formation of silicon nanowires SN by the vapor deposition process. But the metal particles MP are not limited thereto as long as they are stable in the negative electrode voltage range during the electrochemical reaction.

The amount of the metal particles MP may be about 0.1 wt% to about 10 wt%, about 2 wt% to about 8 wt%, or about 3 wt% to about 7 wt% based on a total weight of the first negative electrode active material AM. When the amount of the metal particles MP exceeds these ranges the capacity and capacity retention rate of the rechargeable lithium battery may decrease. When the amount of the metal particles MP is less than these range, it may be difficult to act as a catalyst in silicon nanowire formation.

As noted above, the metal particles MP may function as a catalyst when the silicon nanowires SN are formed by a vapor deposition process. The metal particles MP may induce to the formation of silicon nanowires SN exclusively within the pores of the porous particle PP. The metal particles MP may be formed by reduction of metal ions.

An average diameter of the metal particles MP may be from about 2 nm to about 10 nm. The average diameter of the metal particles may be the same as or smaller than an average diameter of silicon nanowires SN (described below). The average diameter of the metal particles MP may be difficult to form with a diameter smaller than the above range during the production process. The average diameter of the metal particles MP may be outside the above range when multiple metal particles MP overlap. Therefore, the maximum diameter of the metal particles MP is not limited to the above range.

The metal particles MP are in contact with one end of the silicon nanowire SN and may be in contact with the inner surface of the pores of the porous particle PP. The metal particles MP attached to one end of the silicon nanowire SN may be physically or chemically bonded.

As noted above, the first negative electrode active material AM includes silicon nanowires SN located within the pores of the porous particle PP. One end of each silicon nanowire SN is attached to the metal particle MP. The other end of each silicon nanowire SN may be attached inside the pores of the porous particle PP.

An average cross-sectional diameter of the silicon nanowires SN may be, for example, from about 2 nm to about 12 nm. The average diameter of the silicon nanowires SN may be the same as or larger than the average diameter of the metal particles MP. The average diameter of silicon nanowires SN may be difficult to manufacture below this range. Beyond this range, structural defects caused by volume expansion may occur during charging and discharging.

The average length of the silicon nanowires SN may be, for example, in the range of about 15 nm to about 1000 nm. When the length of the silicon nanowires SN exceeds this range, the silicon nanowires SN may be exposed outside the pores of the porous particle PP so that side reactions may increase. The length of the silicon nanowires SN may be such that they are not exposed outside the pores of the porous particle PP. In this case, the silicon nanowires SN may be non-linear, linear, or a combination thereof. When the silicon nanowires SN are exposed outside the pores of the porous particle PP, the specific surface area increases even if an amorphous carbon coating layer is formed, and, as a result, a side reaction with the electrolytic solution may occur.

The amount of the silicon nanowires SN may be, for example, about 30 wt% to about 70 wt%, about 30 wt% to about 60 wt%, about 35 wt% to about 55 wt%, or about 35 wt% to about 50 wt% based on a total weight of the first negative electrode active material AM. When the amount of silicon nanowires SN exceeds these ranges, the first negative electrode active material may be structurally unstable due to volume expansion during charging and discharging. In addition, structural instability may occur, and the capacity retention rate may be lowered. On the other hand, when the amount of silicon nanowires SN is less than the above range, the capacity and efficiency of the rechargeable lithium battery 100 may be adversely affected.

The silicon nanowires SN may be formed between the metal particles MP and the inner surfaces of the pores of the porous particle PP by a vapor deposition process. The silicon nanowires SN may be grown with the metal particles MP, which are formed on the inner surfaces of the pores of the porous particle PP, serving as a catalyst. The silicon nanowires SN may extend between the metal particles MP and the pore inner surfaces.

The specific surface area of the first negative electrode active material AM may be, for example, about 1.0 m²/g to about 7.0 m²/g, about 2.0 m²/g to about 7.0 m²/g, about 2.5 m²/g to about 7.0 m²/g, about 3.0 m²/g to about 6.5 m²/g, or about 4.0 m²/g to about 6.5 m²/g as measured using the Brunauer-Emmett-Teller (BET) method. The specific surface area may refer to a value measured by nitrogen adsorption. When the specific surface area of the first negative electrode active material AM exceeds these ranges, side reactions may increase, and the initial efficiency and cycle life characteristics may deteriorate.

Referring again to FIG. 8, the first negative electrode active material AM may include a first portion including a surface of the porous particle PP and a second portion including an inside of the porous particle PP. For example, in a cross section of the first negative electrode active material AM, a sector may be drawn by setting a specific central angle based on the center of the cross-section so as to include a portion of the negative electrode active material. The sector may be divided into a first region and a second region. A region including the amorphous carbon coating layer CC portion and the outermost portion (or surface portion) of the porous particle PP may be defined as a first portion A1. The inner region including the pores of the porous particle PP may be defined as a second portion A2. That is, a region adjacent to the surface of the first negative electrode active material AM may be defined as the first portion A1, and a portion located at the center of the first negative electrodes active material AM may also be defined as the second portion A2.

The amount of silicon nanowires SN per unit area of the first portion A1 may be less than the amount of the silicon nanowires SN per unit area of the second portion A2. The amount of the metal particles MP per unit area of the first portion A1 may be less than the amount of the metal particles MP per unit area of the second portion A2. That is, the silicon nanowires SN and the metal particles MP may be mainly located inside the pores of the porous particle PP rather than on the surface of the amorphous carbon coating layer CC of the porous particle PP. In other words, the silicon nanowires SN and the metal particles MP may not be formed on the surface of the porous particle PP and formed only within the pores.

As the surface of the porous particle PP and the amorphous carbon coating layer CC may have a low amount of the silicon nanowires SN or may be free of silicon nanowires SN, issues caused by the exposure of the silicon nanowires SN to the outside may be alleviated. When the silicon nanowires SN are exposed to the outside of the first negative electrode active material AM, water and silicon may react during the slurry mixing process to generate hydrogen gas. In addition, this may affect the slurry viscosity and cause side reactions with the electrolyte solution, which may deteriorate the cycle life characteristics.

An average particle diameter (D50) of the first negative electrode active material AM may be, for example, about 1.0 µm to about 20.0 µm, about 4.0 µm to about 10.0 µm, about 5.0 µm to about 9.0 µm, or about 5.0 µm to about 8.0 µm. At this time, the average particle diameter (D50) of the first negative electrode active material AM may mean the average particle diameter (D50), which means the diameter of particles having a cumulative volume of 50% by volume in the particle size distribution. The average particle diameter (D50) of the first negative electrode active material AM may be measured with a particle size analyzer, or may also be measured with a transmission electron microscope photograph or a scanning electron microscope photograph. When the average particle diameter (D50) of the first negative electrode active material AM is in these ranges, it may be possible to uniformly use the inside of the first negative electrode active material AM when the battery is driven, and it may be possible to improve the cycle life of the rechargeable lithium battery.

A shape of the first negative electrode active material AM is not limited. For example, the first negative electrode active material AM may be plate-like, oblate-spherical, or spherical.

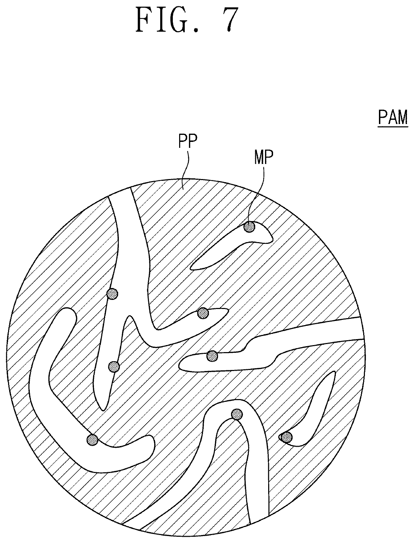

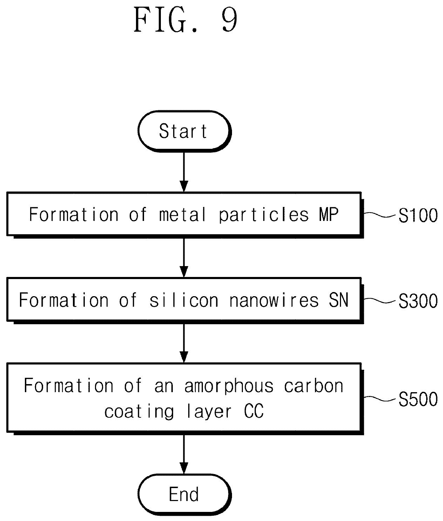

FIG. 7 illustrates a cross-sectional view of a precursor of the first negative electrode active material according to an embodiment of the present disclosure. FIG. 9 is a flowchart of a method of manufacturing a negative electrode active material according to an embodiment of the present disclosure.

Referring to FIG. 9, a method of manufacturing the first negative electrode active material AM according to the present disclosure includes the steps of: forming metal particles MP within pores of a porous particle PP (S100); forming silicon nanowires SN within the pores of a porous particle PP using the metal particles MP as a catalyst (S300); and forming an amorphous carbon coating layer CC on a surface of a porous particle PP (S500).

The metal particles MP are formed in the pores of the porous particle PP (S100). Referring to FIG. 7, the metal particles MP may be formed as shown in FIG. 7 in the pores of the porous particle PP. The negative electrode active material precursor PAM may be in a form in which the metal particles MP are formed within the pores of the porous particle PP. The negative electrode active material precursor PAM may be an intermediate form during production of the first negative electrode active material AM.

The metal particles MP may be formed by reduction of metal ions present in the pores of the porous particle PP. The metal ions may penetrate into the pores of the porous particle PP in a liquid state. The porous particle PP, into which metal ions have been introduced, may be subjected to a washing process using distilled water or the like to remove metal ions from the surface of the porous particle PP. That is, the washing process may allow metal ions to remain only inside the pores of the porous particle PP. The metal ions remaining within the pores may be reduced to metal particles by heat treatment at a temperature of about 200 °C to about 800 °C under a hydrogen (H₂) atmosphere or an inert gas atmosphere.

The silicon nanowires SN are formed by catalysis of the metal particles MP located in the pores of the porous particle PP (S300). The silicon nanowires SN may be formed within the negative electrode active material precursor PAM. In particular, the silicon nanowires SN may be formed between the inner surfaces of the pores of the porous particle PP and the metal particles MP. The silicon nanowires SN may extend between the metal particles MP and the inner surfaces of the pores of the porous particle PP. One end of each silicon nanowire SN may be attached with the metal particle MP. The other end of each silicon nanowire SN may be attached to the inside of the pore of the porous particle PP.

After the negative electrode active material precursor PAM is exposed to a silane gas atmosphere, silicon may be vapor-deposited at a temperature of about 400 °C to about 800 °C to form silicon nanowires SN. The silicon nanowires SN are deposited using the metal particles MP as a catalyst. It may be appropriate to adjust the silicon deposition time such that the silicon nanowires SN do not extend outside of the pores. When the silicon nanowires SN extend beyond the pores, a specific surface area may increase, leading to increased side reactions with the electrolyte solution.

The amorphous carbon coating layer CC is formed on the surface of the porous particle PP (S500). The amorphous carbon coating layer CC may be formed on the surface of the porous particle PP after the deposition of the silicon nanowires SN is completed. The amorphous carbon coating layer CC may be formed in a manner that both fills the inside of the pores of the porous particle and coats the surface of the porous particle.

The amorphous carbon coating layer CC may be formed by vapor deposition process using a carbon source. The carbon source may include methane, ethane, ethylene, acetylene, propane, benzene, and the like. The amorphous carbon coating layer CC may reduce a specific surface area, increase electrical conductivity, and improve the cycle life characteristics by suppressing side reactions with the electrolyte solution.

### Negative Electrode 20

FIG. 6 is a cross-sectional view of a negative electrode according to an embodiment of the present disclosure. Referring to FIG. 6, the negative electrode 20 for a rechargeable lithium battery includes a current collector COL2 and a negative electrode active material layer AML2 on the current collector COL2. The negative electrode active material layer AML2 includes negative electrode active materials, and may further include a binder and/or a conductive material (e.g., an electrically conductive material).

The negative electrode active materials in the negative electrode active material layer AML2 may include the first negative electrode active material AM (e.g., a plurality of the above-described porous particle). The amount of the first negative electrode active material AM may be about 2 wt% to 100 wt% based on a total weight of the negative electrode active materials in the negative electrode active materials layer AML2. That is, the first negative electrode active material AM may be used alone as a negative electrode active material in the negative electrode active material layer AML2. Or, in other embodiments, another negative electrode active material may be mixed and used in addition to the first negative electrode actively material AM.

The negative electrode active materials in the anode active material layer AML2 may further include a second negative electrode active material in addition to the first negative electrode active material AM. The second negative electrode active material may be a carbon-based material. For example, the second negative electrode active material may include at least one of natural graphite, artificial graphite, or a combination thereof. The negative electrode active material layer AML2 further including the second negative electrode active material may have improved cycle life characteristics.

In an embodiment, the negative electrode active materials may include the first negative electrode active material AM and the second negative electrode active material in a weight ratio of about 2:98 to about 100:0. In such an embodiment, the second negative electrode active material may be graphite.

The amount of a negative electrode active materials in the negative electrode active material layer AML2 may be about 80 wt% to about 99 wt% based on a total weight of the negative electrode active materials layer AML2. This range is intended to ensure an appropriate capacity, but may be adjusted by those skilled in the art.

The negative electrode active material layer AML2 may include about 80 wt % to about 99 wt % of negative electrode active materials, about 0.5 wt % to about 10 wt % of a binder, and about 0.5 wt % to about 10% of a conductive material.

The binder may serve to attach the negative electrode active material particles to each other and also to attach the negative electrode active material to the current collector COL2. The binder may include a non-aqueous binder, an aqueous binder, a dry binder, or a combination thereof.

The non-aqueous binder may include polyvinyl chloride, carboxylated polyvinyl chloride, polyvinyl fluoride, an ethylene-propylene copolymer, polystyrene, polyurethane, polytetrafluoroethylene, polyvinylidene fluoride, polyethylene, polypropylene, polyamideimide, polyimide, or a combination thereof.

The aqueous binder may be selected from a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrin, polyphosphazene, poly(meth)acrylonitrile, an ethylene-propylene-diene copolymer, polyvinylpyridine, chlorosulfonated polyethylene, latex, a polyester resin, a (meth)acrylic resin, a phenol resin, an epoxy resins, polyvinyl alcohol, and a combination thereof.

When an aqueous binder is used as the negative electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include Na, K, or Li.

The dry binder may be a polymer material that is capable of being fibrous. For example, the dry binder may be polytetrafluoroethylene, polyvinylidene fluoride, a polyvinylidene fluoride-hexafluoropropylene copolymer, polyethylene oxide, or a combination thereof.

The conductive material may be used to impart conductivity (e.g., electrical conductivity) to the electrode. Any material that does not cause chemical change (e.g., does not cause an undesirable chemical change in the rechargeable lithium battery) and that conducts electrons may be used in the battery. Non-limiting examples of the conductive material include a carbon-based material such as natural graphite, artificial graphite, carbon black, acetylene black, ketjen black, a carbon fiber, a carbon nanofiber, and a carbon nanotube; a metal-based material including copper, nickel, aluminium, silver, etc. in a form of a metal powder or a metal fiber; a conductive polymer such as a polyphenylene derivative; or a mixture thereof.

The negative current collector COL2 may include a copper foil, a nickel foil, stainless steel foil, a titanium foil, a nickel foam, a copper foam, a polymer substrate coated with a conductive metal, or a combination thereof.

### Rechargeable Lithium Battery

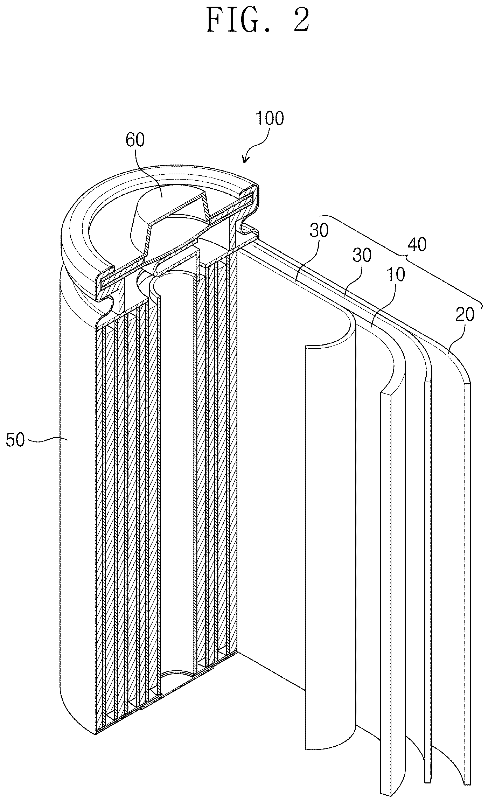

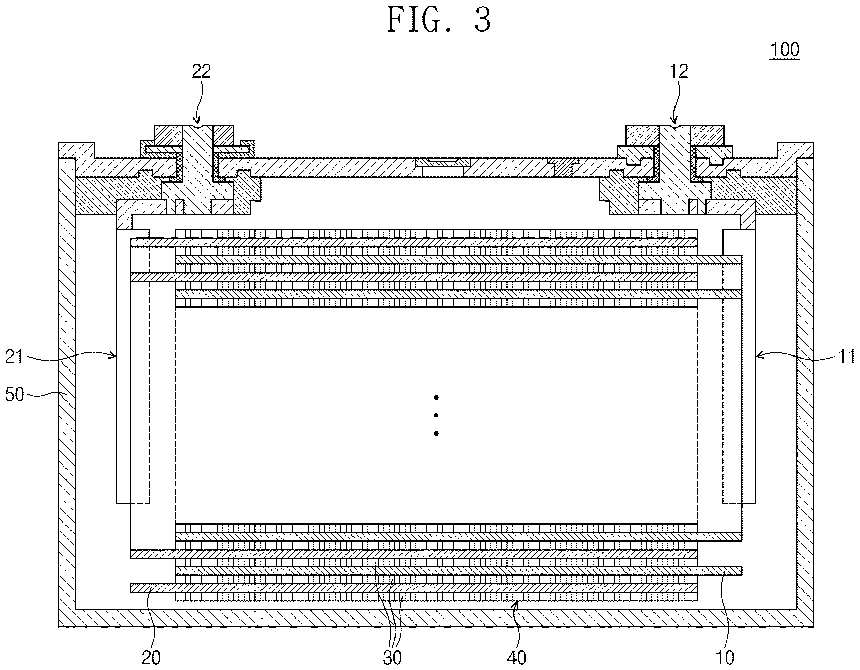

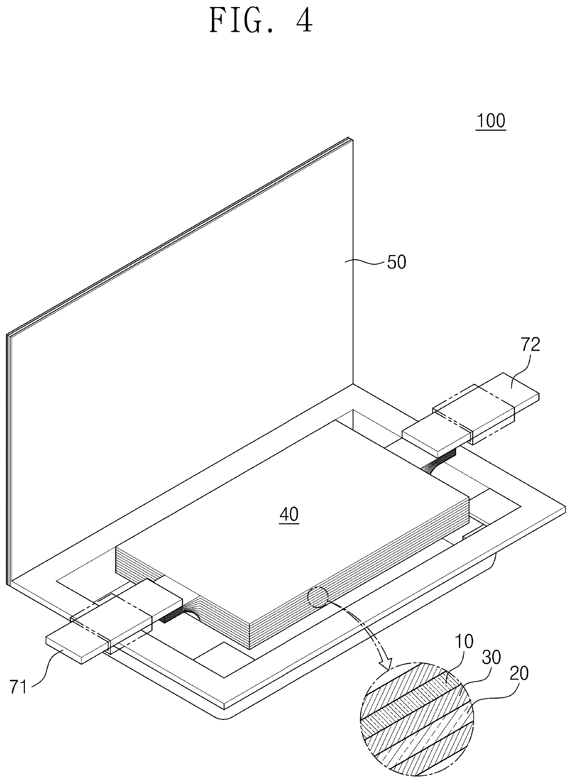

The rechargeable lithium battery may be cylindrical, prismatic, pouch, or coin-type , and the like depending on its shape. FIGS. 2 to 5 are schematic views illustrating a rechargeable lithium battery according to embodiments. FIG. 2 shows a cylindrical battery, FIG. 3 shows a prismatic battery, and FIGS. 4 and 5 show pouch-type batteries. Referring to FIGS. 2 to 5, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution (not shown). The rechargeable lithium battery 100 may include a sealing member 60 sealing the case 50, as shown in FIG. 2. In FIG. 3, the rechargeable lithium battery 100 may include a positive lead tab 11, a positive terminal 12, a negative lead tab 21, and a negative terminal 22. As shown in FIGS. 4 and 5, the rechargeable lithium battery 100 may include an electrode tab 70, which may be, for example, a positive electrode tab 71 and a negative electrode tab 72 forming an electrical path for inducing the current formed in the electrode assembly 40 to outside of the battery.

The rechargeable lithium battery according to an embodiment may be used in automobiles, mobile phones, and/or various types of electric devices, as non-limiting examples.

The following Examples and Comparative Examples are provided in order to highlight characteristics of one or more embodiments of the present disclosure. But the Examples and Comparative Examples are not to be construed as limiting the scope of the embodiments,. Further, it will be understood that the embodiments are not limited to the particular details described in the Examples and Comparative Examples.

### Example 1 - Preparation of First Negative Electrode Active Material

### 1) Formation of a negative electrode active material precursor

After chloroauric acid (HAuCl₄) was dissolved in distilled water, porous particles were added and stirred together. The mixture was stirred for 7 days or more to sufficiently allow the aqueous solution of chloroauric acid to infiltrate into the pores of the porous particles. The porous particles were then washed with distilled water using a vacuum filter, and the porous particles were collected. The recovered porous particles were dried in an oven at about 80 °C. The dried porous particles were heat-treated at about 400 °C or higher in a hydrogen atmosphere to reduce gold ions to gold particles, thereby producing a negative electrode active material precursor. In this process, hard carbon (about 5 µm) was used as the porous particles. The porosity of the porous particles of hard carbon was about 70%, as measured by nitrogen adsorption-desorption analysis (BET analysis).

### 2) Formation of silicon nanowires

The negative electrode active material precursor prepared above was heat-treated at a temperature of about 400 °C or higher under a silane gas atmosphere to deposit silicon on the gold particles.

### 3) Formation of an amorphous carbon coating layer

An amorphous carbon coating layer was formed on the surface of the porous particles, after the deposition of the silicon nanowires, by vapor deposition at a temperature of 650 °C or higher using acetylene gas. The first negative electrode active material was produced by the above-described method. The amounts of the metal particles, the silicon nanowires, and the amorphous carbon coating layer in the produced first negative electrode active material were about 5 wt %, about 48 wt %, and about 5 wt %, respectively, based on a total weight of the first negative electrode active material. An average particle diameter (D50) of the produced first negative electrode active material was about 6 µm (measured using a particle size analyzer).

### Example 2

A first negative electrode active material was prepared in the same manner as in Example 1 described above, except that the porous particles were silica gel (about 5 µm, S-CHEMTEECH). The porosity of the porous particles of silica gel was about 70%, as measured by nitrogen adsorption-desorption analysis (BET analysis).

### Example 3

A first negative electrode active material was produced in the same manner as in Example 1 described above, except that the porous particles used were alumina (5 µm, Moracon Corp.). The porosity of the porous particles of alumina was about 70%, as measured by nitrogen adsorption-desorption analysis (BET analysis).

### Example 4

A first negative electrode active material was produced in the same manner as in Example 1 described above, except that stannous chloride (SnCl₂·2H₂O) was used instead of chloroauric acid in distilled water during the negative electrode active material precursor formation step.

### Example 5

A first negative electrode active material was prepared in the same manner as Example 1 described above, except that the silane gas exposure time in the silicon nanowires formation step was reduced compared to Example 1, so that the amounts of the metal particles, the silicon nanowires, and the amorphous carbon coating layer in the first negative electrode active materials were respectively about 5 wt%, about 35 wt%, and about 5 wt% based on the total weight of the first negative electrode active material.

### Comparative Example 1-No Metal Particles

A first negative electrode active material was prepared in the same manner as in Example 1 described above, except that chloroauric acid was not added in the negative electrode active material precursor forming step so that the amounts of the metal particles, the silicon nanowires, and the amorphous carbon coating layer in the first negative electrode active material were 0 wt %, about 50.5 wt %, and about 5.3 wt %, respectively, based on the total weight of the first negative electrode active material.

### Comparative Example 2-No Silicon Nanowires

The first negative electrode active material was prepared in the same manner as in Example 1, except that the silicon nanowire formation step was omitted. In the prepared first negative electrode active material, the amounts of the metal particles, silicon nanowires, and the amorphous carbon coating layer were about 5 wt%, 0 wt%, and about 5 wt%, respectively, based on the total weight of the first negative electrode active material.

### Comparative Example 3-Amorphous Carbon Coating Layer Not Present

The first negative electrode active material was prepared in the same manner as in Example 1 described above, except that the amorphous carbon coating layer formation step was omitted. In the prepared first negative electrode active material, the amounts of the metal particles, silicon nanowires, and the amorphous carbon coating layer were about 5.3 wt%, about 50.5 wt%, and 0 wt%, respectively, based on the total weight of the first negative electrode active material.

Table 1 below summarizes the configuration of the first negative electrode active material of each of Examples and Comparative Examples.

**[Table 1]**

| | Porous Particle | Metal Particles | Silicon Nanowires Amount (wt %*) | Metal Particles Amounts (wt %*) | amorphous carbon coating layer Amounts (wt %*) | Specific Surface Area (m²/g) |
|---|---|---|---|---|---|---|
| Example 1 | hard carbon | Au | 48 | 5 | 5 | 4.0 |
| Example 2 | silica gel | Au | 48 | 5 | 5 | 4.3 |
| Example 3 | alumina | Au | 48 | 5 | 5 | 4.1 |
| Example 4 | hard carbon | Sn | 48 | 5 | 5 | 4.7 |
| Example 5 | hard carbon | Au | 35 | 5 | 5 | 7.0 |
| Comparative Example 1 | hard carbon | - | 50.5 | 0 | 5.3 | 4.5 |
| Comparative Example 2 | hard carbon | Au | 0 | 5 | 5 | 80.0 |
| Comparative Example 3 | hard carbon | Au | 50.5 | 5.3 | 0 | 60.0 |

The weight percentages in Table 1 are based on a total weight of the first negative electrode active material.

### Negative Electrode Preparation

The first negative electrode active material produced in Examples 1 to 5 and Comparative Examples 1 to 3 and graphite, used as the second negative electrode active material, were blended to achieve a specific capacity of 500 mAh/g, thereby producing a negative electrode active material mixture. Then, the negative electrode active material mixture, carboxymethyl cellulose, and styrene-butadiene rubber were mixed to prepare a negative electrode slurry. At this time, the weight ratio of the negative electrode active material mixture to carboxymethyl cellulose to styrene-butadiene rubber in the slurry was about 97.5:1.0:1.5.

The negative electrode was fabricated by applying, drying, and rolling the negative electrode slurry on a copper foil.

Hereinafter, a negative electrode including the first negative electrode active material of Example 1 is defined as a negative electrode of Example 1. Examples 2 to 5 and Comparative Examples 1 to 3 are also defined in the same manner.

### Rechargeable Lithium Battery Production

LiCoO₂ (96 wt%), polyvinylidene fluoride (PVdF) (2 wt%), and carbon black (2 wt%) were mixed in N-methylpyrrolidone to prepare a slurry. Here, the wt% values are based on the total weight of solids in the slurry. The prepared slurry was applied to an aluminium foil, dried, and rolled to fabricate a positive electrode.

A coin full cell was fabricated using the negative electrode, the positive electrode, a separator made of polyethylene, and an electrolytic solution. The electrolytic solution was prepared by dissolving 1.5 M of LiPF₆ in an organic solvent composed of ethylene carbonate (EC), diethyl carbonate (DEC), and dimethyl carbonate (DMC) mixed at a volume ratio of about 2:1:7 and adding about 3.5 parts by weight of fluoroethylene carbonate (FEC) to 100 parts by weight of the organic solvent. In addition, a coin-type half-cell was fabricated by applying about 0.5 mm lithium metal as a counter electrode to the negative electrode of the coin full cell configuration.

### Evaluation Example 1 - Capacity Retention Rate

Characteristics of a rechargeable lithium battery including a negative electrode of Examples and Comparative Examples were evaluated.

A coin full cell was initially charged to 4.2 V under a constant current (0.2 C) condition, and further charged under a current of 0.01 C condition until the current reached 0.01 C. After completion of charging, the battery was rested for 10 minutes and then discharged to 2.5 V under a constant current (0.2 C) condition to perform the initial charge-discharge cycle, and the discharge capacity was evaluated. After 1000 charge-discharge cycles under the same conditions, the discharge capacity was measured. The ratio of the discharge capacity at the 1000th cycle to the initial discharge capacity was calculated and is indicated as the capacity retention rate in Table 2 below.

**[Table 2]**

| | Capacity Retention Rate (%) |
|---|---|
| Example 1 | 85 |
| Example 2 | 87 |
| Example 3 | 86 |
| Example 4 | 82 |
| Example 5 | 84 |
| Comparative Example 1 | 76 |
| Comparative Example 2 | 30 |
| Comparative Example 3 | 58 |

As evidenced by the results shown in Table 2, when the first negative electrode active material does not include metal particles, as in the negative electrode of Comparative Example 1, the capacity retention rate decreases. This is believed to be because silicon grows not only inside the pores but also outside the pores, increasing the specific surface area and thereby accelerating side reactions. In addition, when the first negative electrode active material does not include silicon nanowires, as in the negative electrode of Comparative Example 2, only the porous particle, metal, and amorphous carbon coating layer remain, and it may be seen that the capacity retention rate significantly decreases.

It can also be understood that when the first negative electrode active material does not include an amorphous carbon coating layer, as in the negative electrode of Comparative Example 3, the capacity retention rate significantly decreases. This is believed to be due to an increase in the specific surface area of the negative electrode active material, which leads to increased side reactions.

In the case of the negative electrodes of the Examples, it can be understood that the capacity retention rate was significantly superior. This is believed to be because the silicon nanowires are present within the pores of the first negative electrode active material, maintaining structural stability even during volume expansion, and because the amorphous carbon coating layer provides excellent conductivity.

### Evaluation Example 2- Confirmation of Expansion Rate

A thickness of the negative electrode active material layer was measured in the coin full cell of Evaluation Example 1 before initial charging and discharging. Thereafter, 50 cycles of charging and discharging were performed under the same conditions as those of the coin full cell of Evaluation Example 1. After the cycles were completed, the coin cell was disassembled, and the thickness of the negative electrode active material layer was measured again. At this time, the expansion ratio was calculated using the following Equation 1.

At this time, the thickness was measured using a micrometer, and the average value was obtained from five repeated measurements. The expansion ratio measured by this method is shown in Table 3 below. In Equation 1, A refers to the thickness of the negative electrode active material layer after the 50th cycle, and B refers to the initial thickness of the negative electrode active material layer prior to cycling. [Equation 1] $Expansion ratio \left(%\right) = \left[\left(A-B\right)/A\right] \times 100$

**[Table 3]**

| | Expansion Ratio (%) |
|---|---|
| Example 1 | 13 |
| Example 2 | 11 |
| Example 3 | 11 |
| Example 4 | 13 |
| Example 5 | 12 |
| Comparative Example 1 | 18 |
| Comparative Example 2 | unmeasurable |
| Comparative Example 3 | 23 |

As in the negative electrode of Comparative Example 1, when the first negative electrode active material does not include metal particles, the expansion ratio is higher than that of the Examples. This is believed to be because, when metal particles are not present in the porous particles of the first negative electrode active material, silicon nanowires are formed not only within the pores but also on the surface, thereby being exposed to the outside.

In addition, it can be seen that the expansion ratio was low when the negative electrode did not include silicon nanowires, as in the negative electrode of Comparative Example 2. This is because silicon nanowires were not present. However, through Evaluation Example 1 and the like, it was confirmed that the capacity retention rate was significantly low. That is, since silicon is not included, there is no advantage in terms of capacity, indicating that it is not practically suitable as a negative electrode active material.

It may be seen that, as in the negative electrode of Comparative Example 3, when the amorphous carbon coating layer is not included, the expansion ratio is significantly higher compared to the Examples. This is believed to be because the surface of the porous particles is exposed to the outside, thereby directly exposing the silicon nanowires present inside the pores to the external environment.

On the other hand, in the case of the negative electrodes of the Examples, it can be seen that the expansion ratio is significantly lower than that of the negative electrodes in the Comparative Examples.

In summary, the rechargeable lithium battery including the negative electrodes of the Examples not only exhibits excellent capacity retention, as shown in Evaluation Example 1 described above, but also maintains structural stability due to a low expansion ratio of the negative electrode even after repeated charge and discharge cycles.

By using the negative electrode active material according to the present disclosure, a structurally stable negative electrode may be produced, and a rechargeable lithium battery having excellent capacity and life characteristics may be produced.

By using the method of manufacturing a negative electrode active material according to the present disclosure, it is possible to produce the negative electrode active material excellent in capacity, efficiency, and cycle life characteristics.

While the present disclosure has been described with reference to preferred embodiments, it should be understood that these embodiments are provided for illustrative purposes only and do not limit the scope of the present disclosure. Various modifications and equivalent arrangements may be made without departing from the scope of the appended claims. Accordingly, the described embodiments should be regarded as examples rather than limitations of the present disclosure.

## Claims

1. A negative electrode active material comprising:
a porous particle and an amorphous carbon coating layer surrounding the porous particle,
wherein the porous particle includes metal particles and silicon nanowires within pores of the porous particle, and
wherein an end of each of the silicon nanowires is attached to the metal particles.

2. The negative electrode active material as claimed in claim 1, wherein the ends of the silicon nanowires are first ends, and
wherein second ends of the silicon nanowires are attached inside the pore of the porous particle.

3. The negative electrode active material as claimed in claim 1 or claim 2, wherein the porous particle comprises at least one of hard carbon, alumina, silica gel, activated carbon, zeolite, porous titania, or a combination thereof.

4. The negative electrode active material as claimed in any preceding claim, wherein an amount of the amorphous carbon coating layer is about 0.1 wt% to about 8 wt% based on a total weight of the negative electrode active material.

5. The negative electrode active material as claimed in any preceding claim, wherein the metal particles comprise at least one of Cu, Ag, Ga, Ti, Au, Sn, or a combination thereof.

6. The negative electrode active material as claimed in any preceding claim, wherein an amount of the metal particles is about 0.1 wt% to about 10 wt% based on a total weight of the negative electrode active material.

7. The negative electrode active material as claimed in any preceding claim, wherein an average diameter of the silicon nanowires is from about 2 nm to about 12 nm.

8. The negative electrode active material as claimed in any preceding claim, wherein an amount of the silicon nanowires is about 30 wt% to about 70 wt% based on a total weight of the negative electrode active material.

9. The negative electrode active material as claimed in any preceding claim, wherein a specific surface area (BET) of the negative electrode active material is about 1.0 m²/g to about 7.0 m²/g.

10. The negative electrode active material as claimed in claim 1, wherein a first portion of the negative electrode active material includes a surface of the porous particle and a second portion includes an inside of the porous particle,
wherein an amount of the silicon nanowires per unit area in the first portion is less than an amount of the silicon nanowires per unit area in the second portion, and
wherein an amount of the metal particles per unit area in the first portion is less than an amount of the metal particles per unit area in the second portion.

11. A method of manufacturing a negative electrode active material, the method comprising:
forming metal particles within pores of a porous particle;
forming silicon nanowires within the pores using the metal particles as a catalyst; and
forming an amorphous carbon coating layer on a surface of the porous particle.

12. The method as claimed in claim 11, wherein the metal particles are formed by reduction of metal ions within the pores of the porous particles.

13. The method as claimed in claim 11 or claim 12, wherein the silicon nanowires are formed between the metal particles and inner surfaces of the pores by a vapor deposition process,
optionally wherein the vapor deposition process is performed at a temperature of about 400 °C to about 800 °C.

14. The method as claimed in any one of claims 11 to 13, wherein the amorphous carbon coating layer is formed by a vapor deposition process.

15. A negative electrode comprising:
a negative electrode current collector; and
a negative electrode active material layer on the negative electrode current collector,
wherein the negative electrode active material layer comprises negative electrode active materials,
wherein an amount of the negative electrode active materials in the negative electrode active layer is about 80 wt% to about 99 wt% based on a total weight of the negative electrode active material layer,
wherein the negative electrode active materials comprise a first negative electrode active material,
wherein the first negative electrode active material comprises a porous particle and an amorphous carbon coating layer surrounding the porous particle,
wherein the porous particle includes metal particles and silicon nanowires in pores of the porous particle, and
wherein a specific surface area (BET) of the first negative electrode active material is from about 1.0 m²/g to about 7.0 m²/g.
